# EUROPEAN PATENT APPLICATION

(11) **EP 2 402 814 A1**
(43) Date of publication of application: **04.01.2012**
(21) Application number: 10167812.6
(22) Date of filing: 30.06.2010
(51) Int. Cl.: G02B 27/22, H04N 13/00

(54) **Autostereoscopic display device**

(71) Applicant: Koninklijke Philips Electronics N.V., 5621 BA Eindhoven (NL)
(72) Inventor: Willemsen, Oscar, H., 5600 AE Eindhoven (NL); Pijlman, Fetze, 5600 AE Eindhoven (NL); De Zwart, Siebe, T., 5600 AE Eindhoven (NL)
(74) Representative: Damen, Daniel Martijn

(57) **Abstract**

A switchable autostereoscopic display device comprises a first LED display panel, an array of non-switchable lens elements and a second LED display panel. This arrangement avoids the need for a switchable lens array to implement a switchable 2D/3D display. The first LED display panel can simply be turned off so that the lens array does not play a role in generating a 3D output. The second LED display panel then produces the desired 2D image.

## Description

### FIELD OF THE INVENTION

This invention relates to an autostereoscopic display device of the type that comprises a display panel having an array of display pixels for producing a display and a plurality of imaging means, such as lenticular elements, arranged over the display panel and through which the display pixels are viewed.

### BACKGROUND OF THE INVENTION

A known autostereoscopic display device is described in GB 2196166 A. This known device comprises a two dimensional liquid crystal display panel having a row and column array of display pixels acting as a spatial light modulator to produce the display. An array of elongate lenticular elements extending parallel to one another overlies the display pixel array, and the display pixels are observed through these lenticular elements.

The lenticular elements are provided as a sheet of elements, each of which comprises an elongate semi-cylindrical lens element. The lenticular elements extend in the column direction of the display panel, with each lenticular element overlying a respective group of two or more adjacent columns of display pixels.

In an arrangement in which, for example, each lenticule is associated with two columns of display pixels, the display pixels in each column provide a vertical slice of a respective two dimensional sub-image. The lenticular sheet directs these two slices and corresponding slices from the display pixel columns associated with the other lenticules, to the left and right eyes of a user positioned in front of the sheet, so that the user observes a single stereoscopic image. The sheet of lenticular elements thus provides a light output directing function.

In other arrangements, each lenticule is associated with a group of four or more adjacent display pixels in the row direction. Corresponding columns of display pixels in each group are arranged appropriately to provide a vertical slice from a respective two dimensional sub-image. As a user's head is moved from left to right a series of successive, different, stereoscopic views are perceived creating, for example, a look-around impression.

The above described device provides an effective three dimensional display. However, it will be appreciated that, in order to provide stereoscopic views, there is a necessary sacrifice in the horizontal resolution of the device. This sacrifice in resolution is unacceptable for certain applications, such as the display of small text characters for viewing from short distances. For this reason, it has been proposed to provide a display device that is switchable between a two-dimensional mode and a three-dimensional (stereoscopic) mode.

This switching function can be implemented in the type of lenticular display described above. In the two-dimensional mode, the lenticular elements of the switchable device operate in a "pass through" mode, i.e. they act in the same way as would a flat sheet of optically transparent material. The resulting display has a high resolution, equal to the native resolution of the display panel, which is suitable for the display of small text characters from short viewing distances. The two-dimensional display mode cannot, of course, provide a stereoscopic image.

In the three-dimensional mode, the lenticular elements of the switchable device provide a light output directing function, as described above. The resulting display is capable of providing stereoscopic images, but also suffers the inevitable resolution loss mentioned above.

In order to provide switchable display modes, the lenticular elements of the switchable device are formed of an electro-optic material, such as a liquid crystal material, having a refractive index that is switchable between two different values for polarized light. The device is then switched between the modes by applying an appropriate electrical potential to electrode layers provided above and below the lenticular elements. The electrical potential alters the refractive index of the lenticular elements in relation to that of an adjacent optically transparent layer. Alternatively, the adjacent optically transparent layer may be formed of the electro-optic material, with the same result that the refractive index of the lenticular elements in relation to the optically transparent layer is altered.

A 2D/3D switchable system can also be implemented using other display technologies, such as with glasses-based systems, such as polarization based or shutter based glasses. In this case, there is a full resolution 2D mode with the glasses off, and a 3D mode with glasses on. Switchable barrier systems can also be used instead of switchable lenticular systems.

A problem with switchable LC lenticulars is that major adaptations to the LCD manufacturing process are required, compared to the manufacture of standard LCD panels. However, a switchable autostereoscopic technology is preferred by users to glasses-based systems.

### SUMMARY OF THE INVENTION

It is an object of the invention to provide an autostereoscopic display that is switchable between an autostereoscopic mode and a two dimensional mode of display.

The invention is defined by the independent claims. The dependent claims provide advantageous embodiments.

According to the invention, there is provided an s display device as defined in claim 1.

This arrangement avoids the need for a switchable lens array to implement a switchable 2D/3D display. The first LED display panel can simply be turned off so that the lens array does not play a role in generating a 3D output. The second LED display panel then produces the desired 2D image. The light from the second panel is either provided directly to the viewer, or through the lens array, but the lens action does not affect the output because the lens array is not spaced from the second LED display panel in a suitable way to generate views. This display of the invention may thus be manufactured with low cost process.

In one implementation, a polarizer is provided between the array of lens elements and the first LED display panel, and a retarder for changing the polarization state is between the array of lens elements and the first LED display panel. The first LED panel then has a rear reflector. This arrangement absorbs reflections (to improve the contrast of the display). In particular, the retarder can be a quarter wave plate and polarizer can be a linear polarizer.

In another implementation, the first LED panel has a rear absorber. This enables reflections to be absorbed without requiring polarization based components.

The array of lens elements preferably comprises a lenticular array for generating a plurality of views and directing them to different lateral directions.

The array of lenses can be between the first and second LED display panels or on the opposite side of the second LED display panel to the first LED display panel.

The invention also provides a method of operating an autostereoscopic display device, comprising:
in a 3D mode, using a first LED display panel to output multiple views, and projecting these through an array of non-switchable lens elements spaced from the first LED display panel (30) by a distance approximately equal to the focal distance (f) of the lens elements, and operating a second LED display panel, in an at least semi-transparent off-mode, with the output from the first LED display panel passing through the second LED display panel (34); and
in a 2D mode, switching off the first LED display panel and using the second LED display panel to output a single 2D image.

The device can be operated in a combined 2D/3D mode wherein the first LED display panel provides 3D image content and the second LED display panel provides overlaid 2D image content.

### BRIEF DESCRIPTION OF THE FIGURES

Embodiments of the invention will now be described, purely by way of example, with reference to the accompanying drawings, in which:
Figure 1 is a schematic perspective view of a known autostereoscopic display device to explain the principle of operation;
Figure 2 shows a known OLED display with suppression of reflection of ambient light;
Figure 3 shows a first example of display device of the invention;
Figure 4 shows a second example of display device of the invention; and
Figure 5 shows a third example of display device of the invention.

### DETAILED DESCRIPTION OF EMBODIMENTS

The invention provides a switchable autostereoscopic display device comprising a first LED display panel, an array of non-switchable lens elements and a second LED display panel. This arrangement avoids the need for a switchable lens array to implement a switchable 2D/3D display. The first LED display panel can simply be turned off so that the lens array does not play a role in generating a 3D output. The second LED display panel then produces the desired 2D image.

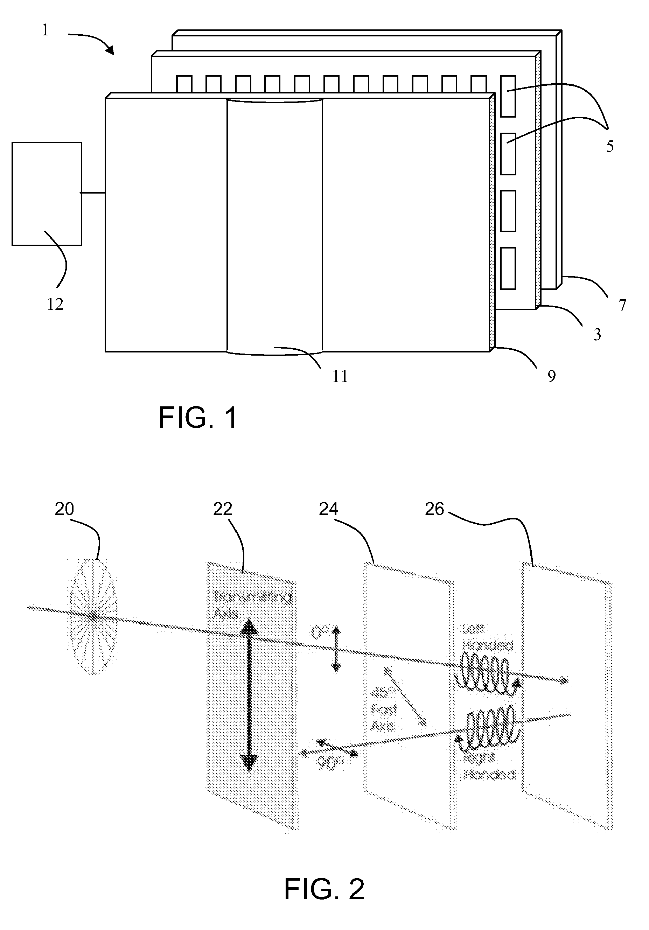

Figure 1 is a schematic perspective view of a known switchable autostereoscopic display device 1 to explain the principle of operation of a known LC based system. The display device 1 is shown in expanded form.

The known device 1 comprises a liquid crystal display panel 3 of the active matrix type that acts as a spatial light modulator to produce the display. The display panel 3 has an orthogonal array of display pixels 5 arranged in rows and columns. For the sake of clarity, only a small number of display pixels 5 are shown in the Figure. In practice, the display panel 3 might comprise about one thousand rows and several thousand columns of display pixels 5.

The structure of the liquid crystal display panel 3 is entirely conventional. In particular, the panel 3 comprises a pair of spaced transparent glass substrates, between which an aligned twisted nematic or other liquid crystal material is provided. The substrates carry patterns of transparent indium tin oxide (ITO) electrodes on their facing surfaces. Polarizing layers are also provided on the outer surfaces of the substrates.

Each display pixel 5 comprises opposing electrodes on the substrates, with the intervening liquid crystal material therebetween. The shape and layout of the display pixels 5 are determined by the shape and layout of the electrodes. The display pixels 5 are regularly spaced from one another by gaps.

Each display pixel 5 is associated with a switching element, such as a thin film transistor (TFT) or thin film diode (TFD). The display pixels are operated to produce the display by providing addressing signals to the switching elements, and suitable addressing schemes will be known to those skilled in the art.

The gaps between the display pixels 5 are covered by an opaque black mask. The mask is provided in the form of a grid of light absorbing material. The mask covers the switching elements and defines the individual display pixel areas.

The display panel 3 is illuminated by a light source 7 comprising, in this case, a planar backlight extending over the area of the display pixel array. Light from the light source 7 is directed through the display panel 3, with the individual display pixels 5 being driven to modulate the light and produce the display.

The display device 1 also comprises a lenticular element arrangement 9, positioned over the display side of the display panel 3, which arrangement is controllable to selectively perform a view forming function. The lenticular element arrangement 9 comprises an array of lenticular elements 11 extending parallel to one another, of which only one is shown with exaggerated dimensions for the sake of clarity.

The lenticular element arrangement 9 comprises a pair of transparent glass substrates with transparent electrode layers formed of indium tin oxide (ITO) provided on their facing surfaces. Each electrode layer is in the form of a plurality of parallel elongate electrodes, and electrodes of the respective different layers are arranged perpendicular to one another. An inverse lenticular structure, formed using a replication technique, is provided between the substrates adjacent to an upper one of the substrates. Nematic liquid crystal material is also provided between the substrates and defines the lenticular lens shapes. This material is switchable between states such that the lens action (at the lens boundaries) can be switched on and off.

It is expected that in a few years OLED will become the dominant display technology, because the displays are ultrathin, very fast, light efficient and can have a very high resolution. However, there is currently no suitable approach for making a switchable 3D display using this technology. It is possible to make the OLED display output polarized so that the known switchable LC lenticular can be used, but this still requires an LC based optical element, and thus eliminates the advantages of using OLED technology in the first place.

This invention provides a switchable 3D OLED display without the need for LC technology. By stacking two OLED panels, one of which is transparent, it is possible to switch between 2D and 3D modes, by switching on one or the other panels. The display is combined with a fixed non-switchable lenticular. As will be explained below, in one example, a retarder film and a polarizer sheet are used, but these are all components that can be made with mass volume processing techniques.

The term OLED display (organic light emitting diode display) is intended to include technologies sometimes described as light emitting polymer (LEP) and organic electro luminescence (OEL). The light-emitting diode (LED) has an emissive electroluminescent layer composed of a film of organic compounds. The layer usually contains a polymer substance that allows suitable organic compounds to be deposited. They are typically deposited in rows and columns onto a flat carrier by a simple "printing" process. The resulting matrix of pixels can emit light of different colors.

It is known to use OLED display technology in television screens, computer monitors, small, portable system screens such as cell phones and PDAs, advertising, information and indication. OLEDs can also be used in light sources for general space illumination, and large-area light-emitting elements. OLEDs typically emit less light per unit area than inorganic solid-state based LEDs which are usually designed for use as point-light sources.

A significant advantage of OLED displays over traditional liquid crystal displays (LCDs) is that OLEDs do not require a backlight to function. Thus, they can display deep black levels, draw far less power, and can be much thinner and lighter than an LCD panel. OLED displays also naturally achieve much higher contrast ratio than LCD monitors.

The most common class of OLED displays is the class of top-emitting displays. In this case, the bottom substrate is covered or made from a very highly reflective medium that acts as an electrode and that reflects light that is emitted to the bottom. This reflective bottom layer has an important disadvantage, that the daylight contrast of the display is severely reduced.

This can be improved by positioning a 1/4 wave plate and a polarizer in front of the display to eliminate reflections of daylight. This arrangement is shown in Figure 2.

The incoming light 20 is unpolarized (i.e. randomly polarized). It passes through a linear polarizer 22, and then a retarder, in the form of a quarter wave plate. In this example, the retarder is aligned at 45 degrees to the transmission axis of the polarizer so that the output is circularly polarized light. Thus, the linear polarizer and retarder together function as a circular polarizer. Upon reflection by a reflective surface 26 (in this case is the substrate mirror), the handedness of the circular polarization is changed, and the reflected light is eventually blocked by the polarizer 22 as shown.

In this way, unwanted reflection of ambient light is avoided.

Another class of OLED displays is transparent displays. In this case both the bottom and the top substrate of the display are made of transparent material. Although not mature yet, working prototypes have been shown at major display conferences.

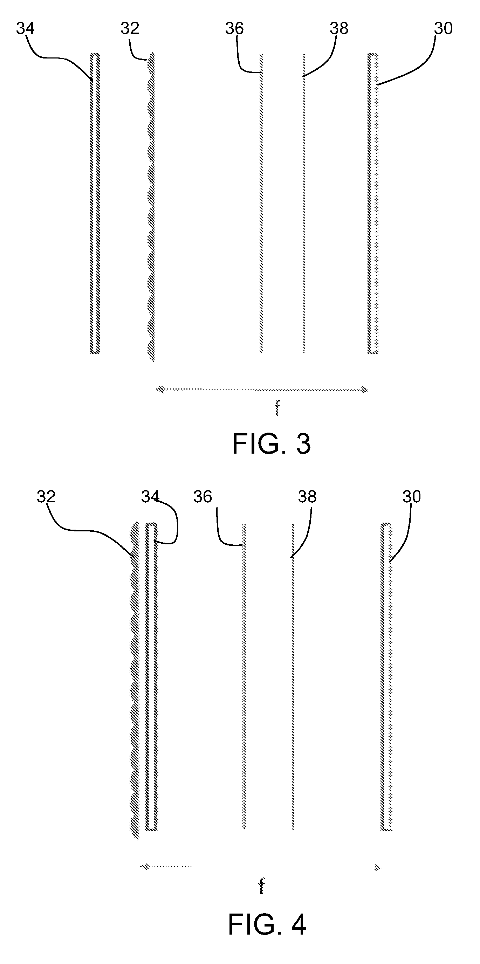

The invention combines these two types of LED display to provide a switchable autostereoscopic display which requires no switchable LC components. A first example of display device of the invention is shown in Figure 3.

The display device comprises a first LED display panel 30 and an array 32 of non-switchable lens elements arranged over the first display panel 30 for directing the light output of the display pixels so as to provide a stereoscopic image. The array of lens elements is spaced from the first LED display panel by a distance approximately equal to the focal distance f of the lens elements.

A second LED display panel 34 is closer to the array 32 of lens elements than the first LED display panel, and the second LED panel has a transparent off-mode and an image display on-mode.

In this way, a transparent second OLED panel is stacked on top of a top emitting first OLED panel. The lenticular is placed with the focal plane of the lenticular approximately at the position of the top emitting panel 30.

In the example of Figure 3, the top emitting panel 30 is provided with a polarizer 36 and a quarter wave plate 38 to remove unwanted reflections (as well as backward illumination from the transparent OLED display), in the manner explained with reference to Figure 2.

The display is operated as follows:
For the 2D mode, the transparent OLED panel 34 is switched on and the top emitting OLED panel 30 is switched off. Light projected to the viewer does not pass any optical element and, hence will give a perfect 2D mode. Light emitted by the transparent panel 34 towards the back is effectively absorbed by the polarizer and retarder on top of the top emitting panel. The lenticular is designed to reflect as little light as possible.
For the 3D mode, the top emitting OLED panel 30 is switched on and the transparent OLED panel 34 is switched off. Light from the top emitting display is collimated by the lens, creating the multiple views for the 3D display. After the lenticular, the light passes through the transparent OLED panel without being refracted.

A modification to the embodiment of Figure 3 can have the lenticular array 32 placed directly on the top emitting OLED 30. The quarter wave plate 38, polarizer 36 and transparent OLED 34 are then placed in the same order as in Figure 3. This will be appropriate for lenses of the lenticular array with very short focal length, which corresponds to a wide viewing angle.

Figure 4 shows a second embodiment having all the same components as in Figure 3. The only difference with respect to the first embodiment is that the transparent OLED 34 is shifted behind the lenticular 32.

The display functions in essentially the same way. In the 2D mode, the transparent OLED panel 34 again is switched on and the top emitting OLED panel 30 is switched off. Light from the transparent OLED 34 that propagates through the lens will not generate views and, hence the display will appear to be in the 2D mode. The visual quality of the 2D mode will however be less than that of the 2D mode of the example of Figure 3. The focal distance of the lens no longer corresponds to the path length to the OLED panel so that views are not created by the lenses.

It is particularly important to block light emitted to the back of the display 34 in this design, as any reflected light will appear to come from a position behind the pixel plane. The polarizer and retarder are again used to absorb the light emitted from the back in the same way as ambient light.

In the 3D mode, the top emitting OLED is switched on and the transparent OLED panel is switched off. Light from the top emitting display is not polarized and after passing the polarizer will be linearly polarized.

The lens will collimate the light from the pixels, thus creating the views for a 3D display.

By using a circular polarizer (the combination of the linear polarizer and quarter wave plate) between the OLED panels, reflection from external light is effectively removed. This enables the device to have a similar contrast as a top emitting OLED display that is equipped with a circular polarizer.

The brightness of the display is similar to the brightness of a conventional top emitting OLED display that is equipped with a circular polarizer. This is because the proposed display either emits light into one direction (2D mode) or in multiple directions and through a polarizer and a transparent display (3D mode). A conventional top-emitting OLED display also looses half of its light from a polarizer.

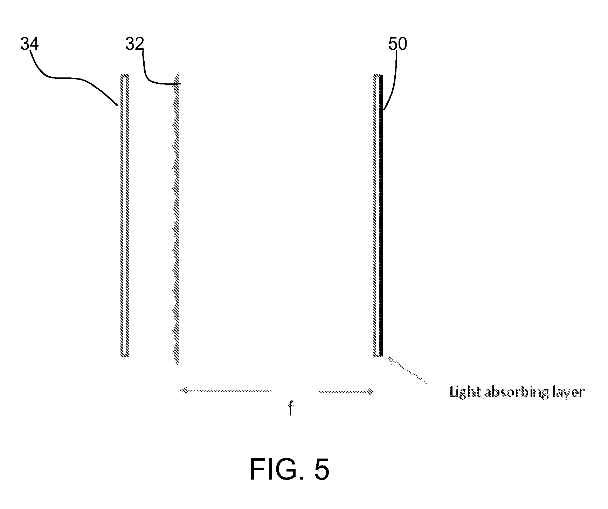

Figure 5 shows a third embodiment.

This arrangement uses two transparent OLED panels 50, 34, but the back of the bottom OLED panel 50 is absorbing (black). In this case, the polarizer and quarter wave plate can be omitted to reduce cost, so that only the non-switchable lenticular array is between the OLED displays 34,50. This arrangement has the disadvantage that the bottom OLED display 50 is less light efficient.

The top OLED display 34 is a transparent device as in the examples above. The position of transparent OLED display 34 and lenticular can again be interchanged.

The pixels of the two display panels can have equal size and pixel lay-out. However, this is not necessary for the invention. The display can be arranged as a segmented 2D/3D display.

It is also possible to combine a lower resolution 3D display with a higher resolution 2D display by switching on pixels of the two panels at the same time. This could be used for text applications that require high resolution at the plane of the display, such as subtitles.

The lenticular lens array will typically generate at least three views, for example 5, 9 or 15 views. The pitch of the lenses will correspond to a number of pixels so that the different pixels under each lens are imaged to different lateral locations. The lenses can be vertical or slanted. A slanting of the lenses can be used to share the reduction in resolution between the row and column directions. These measures are well known.

The second OLED is described as transparent. Of course, perfect transparency is not possible, and this term is intended to mean that at least 30% of incident light can be passed through, and more preferably at least 40% or even 50% of light passes through. The transparency is limited by the presence of a non-transparent TFT in each pixel as well as the imperfect transparency of the materials used, as well as reflection losses. A transparency of 30% can still enable the system to function, providing the brightness of the top emitting OLED panel 30 is sufficient. Suitable transparent OLED panels are commercially available. Of course, the greater the transparency, the more efficient the system in the 3D mode.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

## Claims

1. An autostereoscopic display device capable of having a two-dimensional display mode and/or an autostereoscopic display mode, the display device comprising:
a first light emitting diode (LED) display panel (30);
an array (32) of lens elements arranged over the display panel (30) for directing the light output of the display pixels so as to provide a stereoscopic image to a viewer, the array of lens elements being spaced from the first light emitting diode (LED) display panel by a distance approximately equal to the focal distance (f) of the lens elements; and
a second light emitting diode (LED) display panel (34) arranged in the path of the output from the first light emitting diode (LED) display panel, wherein the second light emitting diode (LED) display panel has an at least semi-transparent off-mode and an image display on-mode.

2. A device as claimed in claim 1, wherein the display device is switchable between the autostereoscopic display mode and the two-dimensional display mode.

3. A device as claimed in claim 1 or 2, further comprising:
a polarizer (36) between the array (32) of lens elements and the first light emitting diode (LED) display panel (30); and
a retarder (38) for changing the polarization state between the array of lens elements and the first light emitting diode (LED) display panel (30),
and wherein the first light emitting diode (LED) panel (30) has a rear reflector.

4. A device as claimed in claim 3, wherein the retarder (38) comprises a quarter wave plate.

5. A device as claimed in claim 3 or 4, wherein the polarizer comprises (36) a linear polarizer.

6. A device as claimed in claim 1, wherein the first light emitting diode (LED) panel (50) has a rear absorber.

7. A device as claimed in any preceding claim, wherein the array (32) of lens elements comprises a lenticular array for generating a plurality of views and directing them to different lateral directions.

8. A device as claimed in any preceding claim, wherein the array (32) of lenses is between the first (30) and second (34) light emitting diode (LED) display panels.

9. A device as claimed in any one of claims 1 to 7, wherein the array (32) of lenses is on the opposite side of the second light emitting diode (LED) display panel (34) to the first light emitting diode (LED) display panel (30).

10. A device as claimed in claim 9, wherein the spacing between the second light emitting diode (LED) display panel (34) and the array (32) of lenses is less than the focal distance (f) of the lens elements.

11. A method of operating an autostereoscopic display device capable of having a two-dimensional display mode and/or an autostereoscopic display mode, the display device, comprising:
in the autostereoscopic display mode, using a first light emitting diode display panel (30) to output multiple views, and projecting these through an array (32) of lens elements spaced from the first light emitting diode display panel (30) by a distance approximately equal to the focal distance (f) of the lens elements, and operating a second light emitting diode display panel (34), in an at least semi-transparent off-mode, with the output from the first light emitting diode display panel passing through the second light emitting diode display panel (34); and
in the two-dimensional display mode, switching off the first light emitting diode display panel (30) and using the second light emitting diode display panel (34) to output a single two dimensional image.

12. A method as claimed in claim 11, comprising attenuating reflections from the first light emitting diode display panel, by arranging a polarizer (36) and a retarder (38) between the array (32) of lens elements and the first light emitting diode display panel (30), and providing the first light emitting diode panel (30) with a rear reflector.

13. A method as claimed in claim 11 or 12, further comprising operating the device in a combined two-dimensional / autostereoscopic display mode wherein the first light emitting diode display panel (30) provides three dimensional image content and the second light emitting diode display panel (34) provides overlaid two-dimensional image content.
